# EUROPÄISCHE PATENTSCHRIFT

(11) **EP 3 493 938 B1**
(45) Veröffentlichungstag und Bekanntmachung des Hinweises auf die Patenterteilung: **08.04.2020**
(21) Anmeldenummer: 17739472.3
(22) Anmeldetag: 10.07.2017
(51) Int. Cl.: B23F 19/05, B23F 21/03

(54) **HONVERFAHREN MIT KREUZSCHLIFF FÜR ZAHNRÄDER**
HONING METHOD WITH CROSS-GRINDING FOR GEAR WHEELS
PROCÉDÉ DE RODAGE À RECTIFICATION CROISÉE POUR ROUES DENTÉES

(30) Priorität: 03.08.2016 DE 102016009468
(43) Veröffentlichungstag der Anmeldung: 12.06.2019
(73) Patentinhaber: AUDI AG, 85045 Ingolstadt (DE)
(72) Erfinder: HEILMANN, Markus, 85748 Garching (DE); BURATOWSKI, Philipp, 91799 Langenaltheim (DE)
(86) Internationale Anmeldenummer: PCT/EP2017/000810
(87) Internationale Veröffentlichungsnummer: WO 2018/024355

(56) Entgegenhaltungen:
- DE-A1- 4 231 021
- DE-A1-102005 005 993
- DE-B- 1 296 486
- DE-C2- 4 329 822
- DE-U1- 9 300 936
- GB-A- 480 720
- RUETTI R: "LEISTUNGSHONEN IST JETZT WIRTSCHAFTLICH WIE NOCH NIE", WERKSTATT + BETRIEB, CARL HANSER VERLAG, MÜNCHEN DE, Bd. 137, Nr. 5, 1. Mai 2004 (2004-05-01), Seite 75/76,78, XP001200799, ISSN: 0043-2792

## Beschreibung

Die vorliegende Erfindung betrifft ein Verfahren zum Erzeugen einer Oberflächenstruktur auf einem Zahnrad in einem Verzahnungshonprozess gemäß dem Oberbegriff des unabhängigen Anspruchs 1, das aus dem Dokument DE 1 296 486 B bekannt ist.

Zahnräder sind aufgrund sehr hoher Druck- und Reibungskräfte bei einem Betrieb in bspw. einem Getriebe enormen Belastungen ausgesetzt. Um die Belastungen jeweiliger Zahnräder zu reduzieren und eine Geräuschemission durch die Zahnräder aufgrund einer gleichförmigen Anregung, die zu Zahnschwingungen führt, zu minimieren, werden Zahnräder beim Betrieb häufig mit einem Film aus Schmiermittel, wie bspw. Öl umgeben.

Beim Herstellen eines Zahnrads werden dessen Zähne häufig mittels Verzahnungshonverfahren oder Verzahnungsschleifverfahren hartfeinbearbeitet. Dabei entstehen auf den Zähnen des Zahnrads Oberflächenstrukturen, die nicht optimal geeignet sind, um einen Film aus Schmiermittel, der auf das Zahnrad aufgebracht wurde, auf dem Zahnrad zurückzuhalten und einen Schutz des Zahnrads vor Reibungsenergie bzw. eine Geräuschdämmung zu gewährleisten. Entsprechend verschleißen Zahnräder aufgrund eines nicht optimalen Films aus Schmiermittel unnötig schnell und bewirken eine unnötig hohe Geräuschemission.

In der deutschen Druckschrift DE 42 31 021 A1 werden ein Verfahren und eine Vorrichtung zur schraubwälzenden Evolventenzahnflankenbearbeitung offenbart, bei dem eine Kreuzschliffstruktur auf einem Werkstück durch eine Pendelbewegung einer variablen Profilverschiebung erzeugt wird. Dabei wird ein globoidförmiges Werkzeug verwendet.

Vor diesem Hintergrund wird ein Verfahren zum Erzeugen einer Oberflächenstruktur auf einem Zahnrad in einem Honprozess vorgestellt, bei dem mindestens ein Honwerkzeug unter Verwendung eines ersten Achskreuzwinkels in einer ersten Richtung an dem Zahnrad entlang bewegt wird, und bei dem anschließend das mindestens eine Honwerkzeug unter Verwendung eines zweiten Achskreuzwinkels in einer zweiten, der ersten Richtung entgegengesetzten Richtung an dem Zahnrad entlang bewegt wird, und bei dem der erste Achskreuzwinkel und der zweite Achskreuzwinkel derart gewählt werden, dass beim Bewegen des mindestens einen Honwerkzeugs in der ersten Richtung auf einer Oberfläche des Zahnrads erzeugte erste Riefen jeweilige beim Bewegen des mindestens einen Honwerkzeugs in der zweiten Richtung auf der Oberfläche des Zahnrads erzeugte zweite Riefen in einem vorgegebenen Winkel zumindest teilweise schneiden.

Ausgestaltungen ergeben sich aus der Beschreibung und den abhängigen Ansprüchen.

Das vorgestellte Verfahren dient insbesondere zum Erzeugen eines Kreuzschliffs, d. h. einer Riefenstruktur auf einer Oberfläche eines Zahnrads, bei dem verschiedene Riefen gekreuzt verlaufen und sich entsprechend in einem vorgegebenen Winkel schneiden. Dabei kann vorgesehen sein, dass lediglich ein Teil jeweiliger erster Riefen jeweilige zweite Riefen schneidet. Vorzugsweise ist jedoch vorgesehen, dass alle ersten Riefen zumindest eine zweite Riefe schneiden.

Um einen Kreuzschliff auf einer Oberfläche eines Zahnrads, wie bspw. einem Zahnrad zu erzeugen, ist erfindungsgemäß vorgesehen, dass ein Honwerkzeug, wie bspw. ein Honring bzw. ein Honrad, an dem Zahnrad unter Verwendung eines ersten Achskreuzwinkels in einer ersten Richtung entlang bewegt wird, und anschließend das Honwerkzeug unter Verwendung eines zweiten Achskreuzwinkels in einer zweiten, der ersten Richtung entgegengesetzten Richtung an dem Zahnrad entlang bewegt wird. Entsprechend ist vorgesehen, dass bei dem erfindungsgemäß vorgesehenen Honprozess ein Richtungswechsel einer Bewegungsrichtung des Honwerkzeugs an dem Zahnrad entlang vollzogen wird.

Weiterhin ist gemäß dem vorgestellten Verfahren insbesondere vorgesehen, dass sich der erste Achskreuzwinkel und der zweite Achskreuzwinkel unterscheiden. Dies bedeutet, dass der Achskreuzwinkel bei einer Änderung einer Bewegungsrichtung des Honwerkzeugs geändert wird. So kann bspw. bei der Bewegung des Honwerkzeugs in die erste Richtung eine Riefenstruktur von links unten nach rechts oben und bei der Bewegung des Honwerkzeugs in die zweite Richtung eine Riefenstruktur von rechts unten nach links oben erzeugt werden, so dass sich die während der Bewegungen in der ersten und der zweiten Richtung erzeugten Riefenstrukturen schneiden und einen Kreuzschliff ergeben, durch den Kompartimente auf der Oberfläche eines jeweiligen Zahnrads, insbesondere auf einer Flanke eines Zahnes eine jeweiligen Zahnrads gebildet werden, die einen Film aus Schmiermittel, wie bspw. Öl besonders effektiv auf dem Zahnrad halten, auch wenn das Zahnrad einer hohen Belastung ausgesetzt ist, wie sie bspw. bei einem Einsatz in einem Getriebe zu erwarten ist.

Es ist insbesondere vorgesehen, dass mittels des vorgestellten Verfahrens eine Kreuzschliffstruktur auf jeweiligen Zahnflanken von Zähnen eines Zahnrads erzeugt wird. Dazu kann gemäß einer möglichen Ausgestaltung des vorgestellten Verfahrens das Zahnrad in eine Honmaschine eingespannt und ein Honring der Honmaschine um das Zahnrad herum geführt werden, wobei der Honring zunächst in einer ersten Rotationsrichtung und anschließend in einer zweiten Rotationsrichtung an dem Zahnrad entlang bewegt wird. Um einen Achskreuzwinkel des Zahnrads bzgl. des Honrings zu ändern, ist vorgesehen, dass das Zahnrad bei einem Richtungwechsel der Bewegung des Honrings erneut, d. h. in einer neuen Ausrichtung, relativ zu dem Horning ausgerichtet wird.

Unter einem Achskreuzwinkel ist im Kontext der vorliegenden Erfindung insbesondere ein Winkel zu verstehen, der zwischen einer durch einen Mittelpunkt eines Honwerkzeugs und orthogonal auf einer Querachse des Werkzeugs stehenden Achse, wie bspw. einer Rotationsachse des Honwerkzeugs und einer durch einen Mittelpunkt eines Zahnrads und orthogonal auf einer Querachse des Zahnrads stehenden Achse, wie bspw. einer Rotationsachse des Zahnrads verläuft.

Unter einer Riefe ist im Kontext der vorliegenden Erfindung eine feine Unebenheit auf einer Oberfläche eines Zahnrads zu verstehen, wie sie bspw. beim Schleifen eines Kreuzschliffs an einem Zylinder entsteht.

Um das erfindungsgemäß vorgesehene Honwerkzeug an einem jeweiligen Zahnrad entlang zu bewegen, können das Zahnrad und/oder das Honwerkzeug bewegt, d. h. insbesondere in Rotation versetzt werden.

Durch die erfindungsgemäß vorgesehene Bewegungsrichtungsänderung zum Erzeugen einer Oberflächenstruktur kann mittels einer effizienten Kinematik, d. h. einer schnell durchzuführenden Bewegungsabfolge, eine Oberflächenstruktur an einem Zahnrad erzeugt werden, die zum Halten eines Films aus Schmiermittel auf dem Zahnrad auch bei hohen Belastungen, wie sie bspw. beim Einsatz in einem Getriebe auftreten, geeignet ist. Entsprechend führt das vorgestellte Verfahren zu einer optimalen Ölbenetzung jeweiliger Zähne bzw. Zahnflanken eines Zahnrads und, dadurch bedingt, zu einem gegenüber dem Stand der Technik erhöhten Wirkungsgrad einer entsprechenden Vorrichtung, wie bspw. einem Getriebe.

In einer möglichen Ausgestaltung des vorgestellten Verfahrens ist vorgesehen, dass als Honprozess ein Verzahnungshonprozess gewählt wird.

Ein Verzahnungshohnprozess, bei dem Zähne eines Zahnrads gehont werden, unterscheidet sich von bspw. einem Zylinderhohnprozess dadurch, dass in der Regel ein radiales Werkzeug, wie bspw. ein Honring bzw. ein Honrad verwendet wird, das sich radial an dem Zahnrad entlang bewegt und in Zahnlücken des Zahnrads eingreift, um die Zähne zu bearbeiten.

In einer weiteren möglichen Ausgestaltung des vorgestellten Verfahrens ist vorgesehen, dass eine Leistungshonanlage verwendet wird, um das Honwerkzeug an dem Zahnrad entlang zu bewegen.

Mittels einer Leistungshonanlage, wie bspw. einer Maschine vom Typ 150SPH der Firma Gleason kann ein Zahnrad einem Leistungshonprozess unterzogen werden. Durch eine Anpassung einer Kinematik der Leistungshonanlage kann eine Bearbeitung des Zahnrads gemäß dem vorgestellten Verfahren erreicht werden. Dazu kann die Leistungshonanlage dazu konfiguriert werden, einen Honring an dem Zahnrad entlang zu bewegen und/oder das Zahnrad an dem Honring entlang zu bewegen, wobei je nach Bewegungsrichtung des Zahnrads bzw. des Honrings ein jeweiliger Achskreuzwinkel zwischen dem Honring und dem Zahnrad eingestellt wird.

In einer weiteren möglichen Ausgestaltung des vorgestellten Verfahrens ist vorgesehen, dass die Riefen auf einer Innenverzahnung oder einer Außenverzahnung des Zahnrads erzeugt werden.

Das vorgestellte Verfahren ermöglicht ein Aufbringen einer Oberflächenstruktur zum Optimieren eines Ölbenetzungsverhaltens eines Zahnrads sowohl für innenverzahnte als auch für außenverzahnte Zahnräder. Insbesondere ist vorgesehen, dass jeweilige Zahnflanken eines Zahnrads behandelt werden, um eine für eine Ölbenetzung optimierte Oberflächenstruktur durch bspw. einen Kreuzschliff zu erzeugen. Dabei ist vorgesehen, dass mittels des Kreuzschliffs Kompartimente erzeugt werden, in denen ein Schmiermittel, wie bspw. Öl vor einem Abgleiten von dem Zahnrad gehindert wird.

Weitere Vorteile und Ausgestaltungen ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt einen Zahn eines Zahnrads mit einer Oberflächenstruktur, die durch einen Honprozess gemäß dem Stand der Technik entsteht.
Figur 2 zeigt einen Zahn eines Zahnrads mit einer Oberflächenstruktur, die durch einen Honprozess gemäß einer möglichen Ausgestaltung des vorgestellten Verfahrens entsteht.

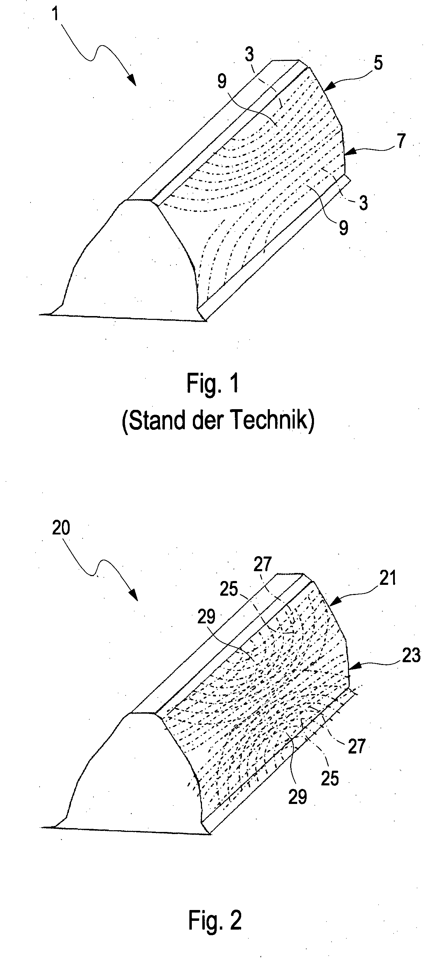

In Figur 1 ist ein Zahn 1 eines Zahnrads dargestellt, der mittels eines Honrings in einem Verfahren gemäß dem Stand der Technik bearbeitet wurde. Dabei wurde der Honring in einer Richtung unter Beibehaltung eines Achskreuzwinkels zwischen dem Honring und dem Zahn 1 an dem Zahn 1 entlang bewegt. Entsprechend wurde auf dem Zahn 1 eine Oberflächenstruktur ausgebildet, die auf einer Oberseite 5 und einer Unterseite 7 des Zahns 1 jeweils Riefen 3 aufweist, die im wesentlichen parallel zueinander verlaufen. Dabei nähern sich die Riefen 3 auf der Oberseite 5 den Riefen 3 auf der Unterseite 7 an, ohne diese zu schneiden. Dies bedeutet, dass durch die Riefen 3 Kanäle 9 gebildet werden, durch die ein Schmiermittel, wie bspw. Öl unter Einwirkung einer Druckkraft, wie sie bspw. beim Einsatz in einem Getriebe auftritt, von dem Zahn 1 abgeleitet werden kann und der Zahn entsprechend schlecht vor Druck- und Temperaturbelastungen geschützt wird.

In Figur 2 ist ein Zahn 20 eines Zahnrads dargestellt, der mittels eines Honrings gemäß einer möglichen Ausgestaltung des vorgestellten Verfahrens bearbeitet wurde. Dabei wurde der Honring in zwei Richtungen und unter Verwendung zweier unterschiedlicher Achskreuzwinkel an dem Zahn 20 entlang bewegt. Entsprechend wurde auf dem Zahn 20 eine Oberflächenstruktur ausgebildet, die sowohl auf einer Oberseite 21 als auch auf einer Unterseite 23 des Zahns 20 jeweils Riefen 25 und 27 aufweist. Die Riefen 25 wurden während einer Vorwärtsbewegung des Honrings und unter Verwendung eines ersten Achskreuzwinkels von bspw. 20° erzeugt. Die Riefen 27 wurden hingegen während einer Rückwärtsbewegung des Honrings, d. h. einer der Vorwärtsbewegung entgegengesetzt verlaufenden Bewegung des Honrings unter Verwendung eines Achskreuzwinkels von bspw. -20° erzeugt.

Während der Vorwärtsbewegung und der Rückwärtsbewegung des Honrings wurde das Zahnrad jeweils in eine entgegengesetzte Richtung bewegt.

Auffällig ist, dass sich die Riefen 25 und die Riefen 27 gegenseitig schneiden, so dass Kompartimente 29 entstehen, die jeweils von Riefen 25 und Riefen 27 umschlossen sind. Dies führt dazu, dass ein in die Kompartimente 29 eingebrachtes Schmiermittel, wie bspw. Öl, nur schwer aus einem jeweiligen Kompartiment 29 entfernt werden kann, da die Riefen 25 und die Riefen 27 eine Sperrwirkung entfalten und das Schmiermittel in den Kompartimenten 29 halten. Entsprechend ist der Zahn 20 des Zahnrads durch das Schmiermittel auch bei einer hohen Belastung, wie sie bspw. in einem Getriebe zu erwarten ist, geschützt. Dies bedeutet, dass das Zahnrad besonders verschleißarm betrieben werden kann.

## Patentansprüche

1. Verfahren zum Erzeugen einer Oberflächenstruktur auf einem Zahnrad in einem Honprozess, bei dem mindestens ein Honwerkzeug unter Verwendung eines ersten Achskreuzwinkels in einer ersten Richtung an dem Zahnrad entlang bewegt wird, **dadurch gekennzeichnet, dass** anschließend das mindestens eine Honwerkzeug unter Verwendung eines zweiten Achskreuzwinkels in einer zweiten, der ersten Richtung entgegengesetzten Richtung an dem Zahnrad entlang bewegt wird, wobei der erste Achskreuzwinkel und der zweite Achskreuzwinkel derart gewählt werden, dass beim Bewegen des mindestens einen Honwerkzeugs in der ersten Richtung auf einer Oberfläche des Zahnrads erzeugte erste Riefen (25) jeweilige beim Bewegen des mindestens einen Honwerkzeugs in der zweiten Richtung auf der Oberfläche des Zahnrads erzeugte zweite Riefen (27) in einem vorgegebenen Winkel zumindest teilweise schneiden.

2. Verfahren nach Anspruch 1, bei dem als Honprozess ein Verzahnungshonprozess gewählt wird.

3. Verfahren nach Anspruch 1 oder 2, bei dem eine Leistungshonanlage verwendet wird, um das Honwerkzeug an dem Zahnrad entlang zu bewegen.

4. Verfahren nach einem der voranstehenden Ansprüche, bei dem das mindestens eine Honwerkzeug als Honring ausgestaltet und radial an dem Zahnrad entlang bewegt wird.

5. Verfahren nach einem der voranstehenden Ansprüche, bei dem auf dem Zahnrad ein Kreuzschliff erzeugt wird.

6. Verfahren nach einem der voranstehenden Ansprüche, bei dem die Riefen auf einer Innenverzahnung oder einer Außenverzahnung des Zahnrads erzeugt werden.

## Claims

1. Method for creating a surface structure on a gear wheel using a honing process, wherein at least one honing tool is moved along the gear wheel in a first direction using a first axis cross angle, **characterised in that**, subsequently, the at least one honing tool is moved along the gear wheel in a second direction, opposite to the first direction, using a second axis cross angle, wherein the first axis cross angle and the second axis cross angle are selected such that the first grooves (25) created when moving the at least one honing tool in the first direction on a surface of the gear wheel intersect, at least partially, at a predetermined angle, with the second grooves (27) created when moving the at least one honing tool in the second direction on the surface of the gear wheel.

2. Method according to claim 1, wherein the choosing honing process is a gear honing process.

3. Method according to claim 1 or 2, wherein a power honing system is used to move the honing tool along the gear wheel.

4. Method according to any of the preceding claims, wherein the at least one honing tool is designed as a honing ring and is moved radially along the gear wheel.

5. Method according to any of the preceding claims, wherein a cross-hatch finish is produced on the gear wheel.

6. Method according to any of the preceding claims, wherein the grooves are created on an internal toothing or an external toothing of the gear wheel.

## Revendications

1. Procédé de production d'une structure de surface sur une roue dentée dans un processus de pierrage, selon lequel au moins un outil de pierrage est déplacé dans une première direction le long de la roue dentée en utilisant un premier angle d'intersection d'axes,
**caractérisé en ce que**
ensuite, l'au moins un outil de pierrage est déplacé dans une deuxième direction, opposée à la première direction, le long de la roue dentée en utilisant un deuxième angle d'intersection d'axes,
dans lequel le premier angle d'intersection d'axes et le deuxième angle d'intersection d'axes sont choisis de telle sorte que des premières stries (25) produites sur une surface de la roue dentée lors du déplacement de l'au moins un outil de pierrage dans la première direction coupent au moins en partie selon un angle prédéterminé des deuxièmes stries (27) respectives produites sur la surface de la roue dentée lors du déplacement de l'au moins un outil de pierrage dans la deuxième direction.

2. Procédé selon la revendication 1, selon lequel un processus de pierrage de denture est choisi comme processus de pierrage.

3. Procédé selon la revendication 1 ou 2, selon lequel une installation de pierrage de puissance est utilisée pour déplacer l'outil de pierrage le long de la roue dentée.

4. Procédé selon l'une quelconque des revendications précédentes, selon lequel l'au moins un outil de pierrage est réalisé sous forme d'anneau de pierrage et est déplacé de façon radiale le long de la roue dentée.

5. Procédé selon l'une quelconque des revendications précédentes, selon lequel une rectification avec stries croisées est produite sur la roue dentée.

6. Procédé selon l'une quelconque des revendications précédentes, selon lequel les stries sont produites sur une denture intérieure ou sur une denture extérieure de la roue dentée.
